# EUROPEAN PATENT SPECIFICATION

(11) **EP 3 864 968 B1**
(45) Date of publication and mention of the grant of the patent: **09.08.2023**
(21) Application number: 19871634.2
(22) Date of filing: 24.09.2019
(51) Int. Cl.: A23L 7/10, B01F 27/091, B01F 35/90

(54) **RICE GEL PRODUCTION SYSTEM AND RICE GEL PRODUCTION METHOD**
SYSTEM ZUR HERSTELLUNG VON REISGEL UND VERFAHREN ZUR HERSTELLUNG VON REISGEL
SYSTÈME ET PROCÉDÉ DE FABRICATION DE GEL DE RIZ

(30) Priority: 10.10.2018 JP 2018191679
(43) Date of publication of application: 18.08.2021
(73) Proprietor: Yanmar Power Technology Co., Ltd., Osaka-shi Osaka 530-0013 (JP)
(72) Inventor: TSUCHIYA, Kuniyasu, Osaka-shi, Osaka 530-0014 (JP); NODA, Shuhei, Osaka-shi, Osaka 530-0014 (JP); OTANI, Yuki, Osaka-shi, Osaka 530-0014 (JP); YAMASHITA, Chisa, Osaka-shi, Osaka 530-0014 (JP)
(74) Representative: Dennemeyer & Associates S.A.
(86) International application number: PCT/JP2019/037297
(87) International publication number: WO 2020/075488

(56) References cited:
- WO-A1-2014/199961
- WO-A1-2014/199961
- WO-A1-2016/106564
- WO-A1-2018/088092
- JP-A- H0 523 119
- JP-A- H11 123 057
- JP-A- H11 253 776
- JP-A- 2010 511 391
- JP-A- 2013 059 723
- JP-A- 2018 023 330
- JP-A- 2018 074 965
- HOUJYO K. et al.: "Effect of Emulsification on the Physical Properties of High-amylose Rice Gel", Food Science and Technology Research, vol. 23, no. 2, 2017, pages 221-228, XP055704024,

## Description

### TECHNICAL FIELD

The present invention relates to a rice gel production system and a rice gel production method that produce a gel-form rice gel from a rice material such as polished white rice, unpolished rice, or rice bran.

### BACKGROUND ART

Recently, rice gel, which can maintain eating quality for a relatively long term and provides good handling, has drawn attention as an alternative food of rice powder.

A production method for such rice gel has been proposed which includes conveying to a pulverizing unit, cooked rice obtained by cooking or steaming a rice material such as polished white rice or unpolished rice in a rice cooking part, and then pulverizing the cooked rice thus conveyed in the pulverizing unit, thereby providing a rice gel (see e.g., Patent Literature 1). Furthermore, this production method for a rice gel described in Patent Literature 1 includes a two-stage pulverizing unit having a tandem arrangement of a first pulverizing unit and a second pulverizing unit, and produces a rice gel by relatively coarsely pulverizing cooked rice in the first pulverizing unit and then more finely pulverizing the post-pulverized first pulverized rice in the second pulverizing unit, thereby producing a high-quality rice gel with reducing pulverizing load in each of the pulverizing units.

In addition, rice bran, which is obtained by polishing row rice, has also been recently investigated to be utilized as a rice material used for production of a rice gel.

JP2018074965 which is directed to a rice-gel production system builds the basis for the preamble of present claim 1.

Likewise, JP2018023330 and WO2014199961 disclose a rice-gel production system according to the preamble of claim 1.

### CITATION LIST

### Patent Literature

Patent Literature 1: WO2018/088092

### DISCLOSURE OF INVENTION

### PROBLEMS TO BE SOLVED BY THE INVENTION

The conventional production system for a rice gel requires three processes, rice cooking, first pulverizing, and second pulverizing, for production of a high-quality rice gel, and further requires a conveyer, such as a belt conveyer, for conveying cooked rice to the pulverizing units. Thus, there have been issues of increased cost of facilities and reduced efficiency of production due to such requirements.

Moreover, such a conveyer that conveys cooked rice is configured as a so-called open system, in which a conveyed object is exposed to air, because of the conveyed object having a solid form, and therefore a heat sterilization treatment in a later step has always been required for commercialization of a rice gel in a shelf-stable condition.

In view of such actual circumstances, a major issue of the present invention is to provide a technology that enables highly-efficient, low-cost production of a high-quality rice gel, with eliminating a rice cooking treatment that cooks or steams a rice material beforehand and provides cooked rice, in a rice gel production system and a rice gel production method that produce a rice gel.

### MEANS FOR SOLVING THE PROBLEMS

A first characteristic configuration of the rice gel production system according to the present invention is a rice gel production system according to present claim 1.

Moreover, a characteristic configuration of the rice gel production method according to the present invention is a rice gel production according to present claim 5.

The configuration can produce a rice gel from a rice material only by performing in a heating and stirring unit, heating of a rice material, such as water-added polished white rice, unpolished rice, or rice bran, with stirring in a sealed container, and provides a gelatinized material, and then performing in a pulverizing unit, pulverizing of the obtained gelatinized material. This can eliminate a rice cooking treatment that cooks or steams a rice material beforehand and provides cooked rice, thereby reducing cost of facilities, improving efficiency of production, and the like.

Furthermore, since the heating and stirring unit generates a gelatinized material by heating a rice material with stirring, rice grains contained in the gelatinized material are to be broken to some extent. This can reduce pulverizing load in a pulverizing unit that pulverizes the gelatinized material. Thus, it is possible to increase production of rice gel in a manner of increasing a throughput in the pulverizing unit, as well as to reduce frictional heat applied to the gelatinized material in pulverizing the gelatinized material in the pulverizing unit so as to lessen lumpy texture. This can suppress discoloration of the rice gel caused by the frictional heat, thereby producing high-quality rice gel.

Accordingly, the present invention can provide a technology that enables highly-efficient, low-cost production of a high-quality rice gel, with eliminating a rice cooking treatment that cooks or steams a rice material beforehand and provides cooked rice, in a rice gel production system and a rice gel production method that produce a rice gel.

In the rice gel production system according to the present invention, the heating and stirring unit has a coarse pulverizing blade that rotates inside the sealed container and coarsely pulverizes the rice material.

The configuration includes in the heating and stirring unit, in addition to a stirrer for stirring a water-added rice material in a sealed container, a rotary coarse pulverizing blade that coarsely pulverizes a rice material being stirred in the sealed container. The gelatinized material thus obtained by coarsely pulverized in this manner is then more finely pulverized in a pulverizing unit to produce a rice gel, leading to reduced pulverizing load in the pulverizing unit, which gives a more limited throughput compared to the heating and stirring unit, thereby providing more improved efficiency of production. Moreover, such reduced pulverizing load in the pulverizing unit further reduces frictional heat applied in the pulverizing unit, thus allowing for production of a higher-quality rice gel.

The third characteristic configuration of the rice gel production system according to the present invention is that the heating and stirring unit includes a scraping stirrer blade that rotates inside the sealed container and stirs the rice material with scraping an adhered material on an inner peripheral face of the sealed container, and a heating part that heats an outer peripheral face of the sealed container.

The configuration can employ, as the heating and stirring unit, a scraping heating and stirring device that heats an outer peripheral surface of a sealed container by the heating part with scraping an adhered material on an inner peripheral face of the sealed container by the scraping stirrer blade. Employment of such scraping heating and stirring device allows preventing the adhered material on the inner peripheral face of the sealed container from burning and sticking because of long-time continuous heating, thereby avoiding reduction in quality due to the burnt deposit.

The fourth characteristic configuration of the rice gel production system according to the present invention is that the pulverizing unit has a rotor that includes shearing pulverizer teeth formed on an outer peripheral face and rotarily drives about an axis, and a liner that surrounds the outer peripheral face of the rotor via a gap that receives passing of the gelatinized material.

The configuration can employ, as the pulverizing unit, a rotary pulverizing device that passes a gelatinized material through a gap formed between an outer peripheral face having a shearing pulverizer teeth formed on the rotor rotarily driving and an inner peripheral face of a liner surrounding the outer peripheral face. Employment of such rotary pulverizing device enables fine pulverization of the gelatinized material in a short time, and thus allows for minute fine pulverization of the gelatinized material with suppressing generation of a burnt deposit due to frictional heat arising in pulverization, thereby providing a high-quality rice gel in a short time.

The fifth characteristic configuration of the rice gel production system according to the present invention is to include a sealed conveying unit that performs conveyance to the pulverizing unit without exposing to air the gelatinized material emitted from the heating and stirring unit.

The configuration will allow heating and sterilizing a rice material and subsequently generating a gelatinized material in the heating and stirring unit. Furthermore, the gelatinized material thus generated has a slurry fluid form, and therefore can be conveyed to a pulverizing unit without being exposed to air, using the sealed conveying unit described above, which for example, conveys by a pump the gelatinized material emitted via a piping from the heating and stirring unit. This enables the rice gel to be commercialized in a shelf-stable condition through finely pulverizing the gelatinized material under a substantially aseptic condition and generating a rice gel, in the pulverizing unit, even with eliminating a heat sterilization treatment for the rice gel.

### BRIEF DESCRIPTION OF DRAWINGS

FIG. 1 is a schematic configuration diagram of a rice gel production system of a first embodiment.
FIG. 2 is a schematic configuration diagram of a rice gel production system of a second embodiment.

### DESCRIPTION OF EMBODIMENTS

### [First Embodiment]

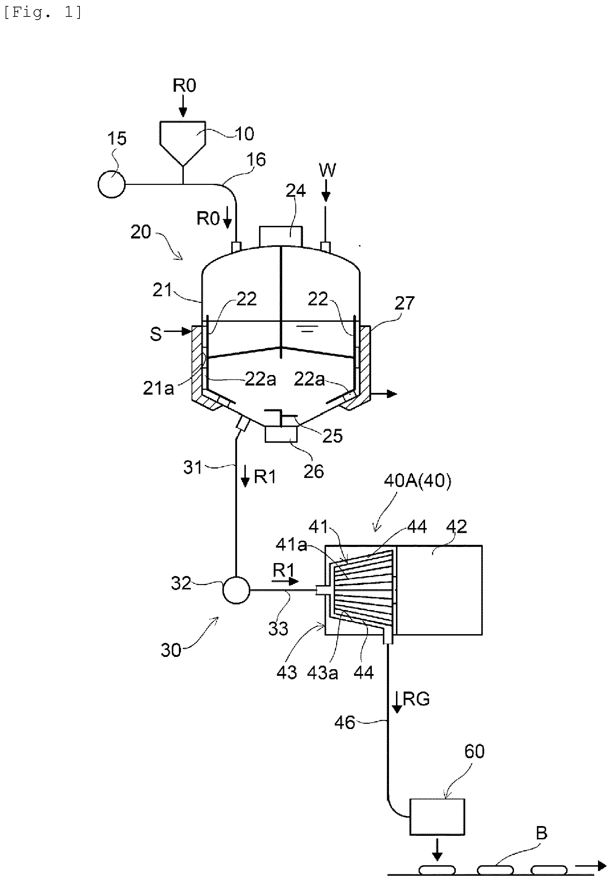

The first embodiment of the rice gel production method and the rice gel production system according to the present invention will be described with reference to FIG. 1.

The rice gel production system shown in FIG. 1 (hereinafter sometimes referred to as the system) includes a heating and stirring device 20 (an example of the heating and stirring unit) and a pulverizing device 40A (an example of a pulverizing unit 40), and is configured as a system that produces a gel-form rice gel RG from a rice material R0. The heating and stirring device 20 performs heating of the water-added rice material R0 with stirring in a sealed container 21 and provides a gelatinized material R1. The pulverizing device 40A performs pulverizing of the gelatinized material R1, which is obtained in the heating and stirring performed by the heating and stirring device 20, and provides the rice gel RG. Incidentally, the system employs polished white rice, unpolished rice, or the like appropriately experiencing rice washing, water immersion, and the like, as the rice material R0.

A method of charging the rice material R0 in the embodiment employs a so-called pneumatic transportation mode that transports the rice material R0, which is charged from a hopper 10 to a conveying duct 16, to the inside of the sealed container 21 of the heating and stirring device 20 using airflow generated by a fan 15. However, another mode may be configured to transport the rice material R0.

The heating and stirring device 20 includes scraping stirrer blades 22 that rotates about a vertical axis inside the sealed container 21, with a motor 24 arranged in the center of the top face of the sealed container 21 as a power source. The scraping stirrer blade 22 includes a scraper plate 22a, and the scraper plate 22a is biased so as to make an edge part come into contact with an inner peripheral face 21a of the sealed container 21. Then, the heating and stirring device 20 performs a so-called stirring treatment that rotates such scraping stirrer blade 22 inside the sealed container 21, which reserves the water-added rice material R0. In this manner, the rice material R0 in the sealed container 21 can be stirred with scraping an adhered material adhering to the inner peripheral face 21a by the scraper plate 22a sliding along the inner peripheral face 21a of the sealed container 21.

The heating and stirring device 20 includes a jacket 27 (an example of the heating part) surrounding the whole periphery of the outer peripheral face of the sealed container 21. In addition, the heating and stirring device 20 can heat the outer peripheral face of the sealed container 21 in a manner of performing a so-called heating treatment that passes heating medium S such as overheated water vapor through the jacket 27, thereby indirectly heating the rice material R0 in the sealed container 21.

Furthermore, the heating and stirring device 20 includes a coarse pulverizing blade 25 that rotates about a vertical axis in the vicinity of the bottom inside the sealed container 21, with a motor 26 arranged in the center of the bottom face of the sealed container 21 as a power source. Then, the heating and stirring device 20 can appropriately, coarsely pulverize the rice material R0 in the sealed container 21 in a manner of performing a so-called coarse pulverization treatment that rotates such coarse pulverizing blade 25 in the vicinity of the bottom inside the sealed container 21, which reserves the water-added rice material R0.

In the heating and stirring performed in the heating and stirring device 20 configured as described above, while the scraping stirrer blade 22 rotates at a relatively low speed, e.g., about 34 rpm, water W with a specified temperature and the rice material R0 are charged at a specified proportion into the sealed container 21, and then a stirring treatment starts. In addition, the heating medium S such as overheated water vapor is started to be supplied into the jacket 27 in the heating and stirring device 20 to start a heating treatment, and such state continues for a specified duration. This makes the sealed container 21 include therein a mixture liquid of the water W and the rice material R0 being stirred with heating indirectly.

Moreover, in the heating and stirring in this embodiment, for example, the mixture liquid in the sealed container 21 boils (100°C) in about 10 minutes, and such state is retained for 10 minutes.

Then, the heating of the mixture liquid of the water W and the rice material R0 stirred in the sealed container 21 generates the gelatinized material R1, in which starch components contained in the rice material R0 are gelatinized. The gelatinized material R1 thus generated is also retained at a high temperature for a specified duration inside the sealed container 21 of the heating and stirring device 20, thereby being heat-sterilized. Furthermore, since the gelatinized material R1 is generated by heating the rice material R0 with stirring , the gelatinized material R1 has a slurry fluid form containing rice grains broken to some extent.

With regard to the temperature of the water W charged into the sealed container 21, the embodiment employs hot water at 80°C as the water W in view of improving water immersion of the rice material R0, shortening heating time, and the like, but the temperature of the water W can be changed appropriately.

Additionally, with regard to pretreatment of the rice material R0 to be charged into the sealed container 21, when unpolished rice is used as the rice material R0, longer immersion time is preferably set because of less water immersion in unpolished rice compared to use of polished white rice as the rice material R0. For example, use of polished white rice as the rice material R0 can include a setting of water immersion time to about 1.5 hours, and use of unpolished rice as the rice material R0 can include a setting of water immersion time to about 4 hours.

Furthermore, a proportion by weight of the water W and the rice material R0 to be charged into the sealed container 21 can be set appropriately. For example, when a proportion of the weight of the water W to the weight of the rice material R0 is set in the range of 1/4-1/2, parameters indicating qualities, such as viscosity and elasticity, of the rice gel RG produced finally can be kept within appropriate ranges.

In the heating and stirring, the outer peripheral face of the sealed container 21 is heated by the jacket 27 with scraping an adhered material on the inner peripheral face 21a of the sealed container 21 by the scraping stirrer blade 22. This prevents the adhered material adhering to the inner peripheral face 21a of the sealed container 21 from burning and sticking because of long-time continuous heating, thereby avoiding reduction in quality due to the burnt deposit.

During or after execution of the heating and stirring, a coarse pulverization treatment is appropriately performed which rotates the coarse pulverizing blade 25 at relatively high speed, e.g., about 1800 rpm with reserving the gelatinized material R1 in the sealed container 21. Moreover, such coarse pulverization treatment pulverizes the gelatinized rice grains contained in the gelatinized material R1 into pieces of appropriate sizes, thus reducing pulverizing load in the pulverizing device 40A described later.

Here, when a coarse pulverization treatment is performed by rotating the coarse pulverizing blade 25 with a high speed for the reason of low water content rate of the gelatinized material R1 in the sealed container 21 or the like, there is concern that bubbles may be generated in the gelatinized material R1, and such bubbles can be a factor of reduced quality of the rice gel RG, which is finally produced. In such case, some approaches can be employed such as reduction in rotation speed of the coarse pulverizing blade 25 in the coarse pulverization treatment, or elimination of the coarse pulverization treatment.

The gelatinized material R1, which is obtained by heating and stirring performed in the heating and stirring device 20 described above, has a slurry fluid form. This allows for delivery from the bottom of the sealed container 21 to a conveying duct 31, and subsequent conveyance via a conveying duct 33 to the pulverizing device 40A in the next process by a uniaxial decentering screw pump 32, e.g., called as MOHNO pump. In other words, these conveying ducts 31 and 33 and pump 32 function as a sealed conveying unit 30 that conveys the gelatinized material R1 emitted from the heating and stirring device 20, to the pulverizing device 40A without exposing to air. This makes the gelatinized material R1, which is heat-sterilized in the heating and stirring device 20, conveyed to the pulverizing device 40A without being exposed to air.

In this regard, the embodiment employs the sealed conveying unit 30, but the conveyer for the gelatinized material R1 can be changed appropriately; for example, an open-air conveyer or the like may be used to convey the gelatinized material R1 to the pulverizing device 40A.

The pulverizing device 40A includes a rotor 41 that rotarily drives about a horizontal axis with a motor 42 as a power source. The rotor 41 is configured to have a truncated cone shape that includes an outer peripheral face 41a having the same angle of inclination to a rotation axis, and the outer peripheral face 41a forms shearing pulverizer teeth formed of grooves extending along the rotation axis or the like. Furthermore, the pulverizing device 40A includes a liner 43 that surrounds the outer peripheral face 41a of the rotor 41 via a gap 44 having a specified width. Namely, the liner 43 is formed into a bottomed tubular shape with a tip part of the rotor 41 (the left side in FIG. 1) as a bottom face, and its inner peripheral face 43a is formed into a truncated cone shape with the gap 44 interposed relative to the outer peripheral face 41a of the rotor 41.

That is, in the rotor 41 that rotarily drives, the gap 44 is formed between the outer peripheral face 41a having the shearing pulverizer teeth formed thereon and the inner peripheral face 43a of the liner 43 surrounding the outer peripheral face 41a. In addition, the pulverizing device 40A is configured as a rotary pulverizing device that pulverizes the gelatinized material R1 in a manner of passing the gelatinized material R1 through the gap 44.

In the pulverizing performed in the pulverizing device 40A configured as described above, the gelatinized material R1 conveyed from the pump 32 is supplied from the center of the bottom of the liner 43 to the gap 44 with rotating the rotor 41 at a high speed, e.g., about 3600 rpm. Then, the gelatinized material R1 passes through the gap 44, which is formed between the outer peripheral face 41a of the rotor 41 rotarily driving and the inner peripheral face 43a of the liner 43 at rest. The gelatinized material R1 receives shear force by relative displacement of the shearing pulverizer teeth, which is formed on the outer peripheral face 41a of the rotor 41, thereby allowing rice grains contained in the gelatinized material R1 to be more finely pulverized in a short time. Then, the gelatinized material R1, which passes the gap 44 and is finely pulverized, is delivered as the rice gel RG from the pulverizing device 40A to the conveying duct 46.

Meanwhile, the rice gel RG, which is emitted from the pulverizing device 40A to the conveying duct 46, has a temperature of nearly boiling point (100°C), and thus makes a concern for generation of bumping associated with sharply reduced pressure. In such case, generation of bumping can also be suppressed by providing a restrictor part or the like in the conveying duct 46 to add back pressure to the rice gel RG delivered from the pulverizing device 40A.

Thus, the rice gel RG, which is delivered to the conveying duct 46, can be divided and packaged into sealed bags B e.g., by a back-in-box packaging device 60, and shipped.

Additionally, in the system, the gelatinized material R1 treated with heat sterilization in the heating and stirring device 20 passes through the pulverizing device 40Aaseptically without being exposed to air, forms into the rice gel RG, and is packaged in the sealed bag B, and thus a heat sterilization treatment for the rice gel RG is eliminated.

### [Second Embodiment]

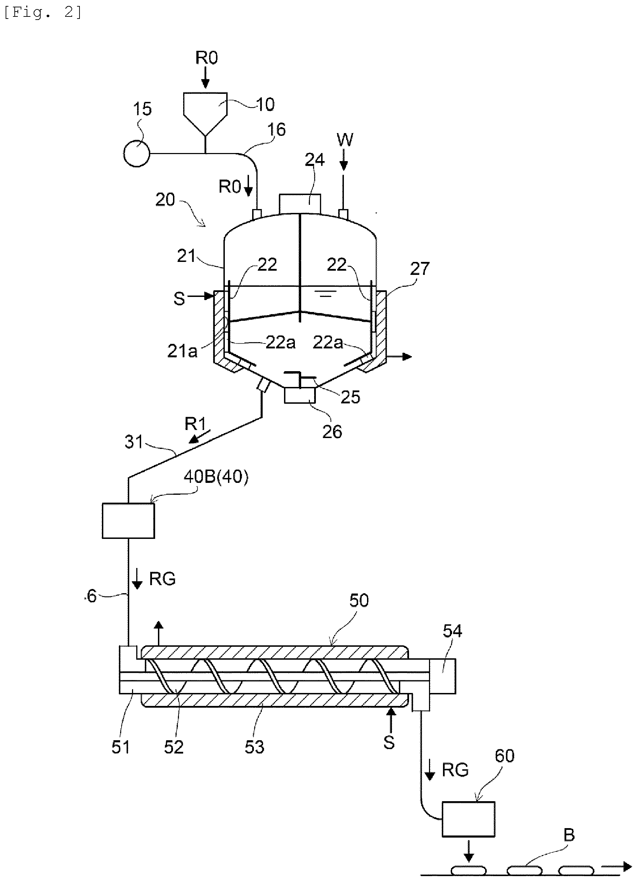

The second embodiment of the rice gel production method and the rice gel production system according to the present invention will be described with reference to FIG. 2.

Here, the embodiment differs from the first embodiment described above, only in including a pulverizing unit 40 that has a different form from the pulverizing device 40A of the first embodiment, and adding a heat sterilization device 50 that applies a heat sterilization treatment to the rice gel RG. Therefore, for a configuration similar to the first embodiment described above, the description below may provide the same signs in the drawings, as well as omit a detailed description.

The rice gel production system shown in FIG. 2 (hereinafter sometimes referred to as the system) includes a heating and stirring device 20 (an example of the heating and stirring unit) and a pulverizing unit 40, and is configured as a system that produces a gel-form rice gel RG from a rice material R0. The heating and stirring device 20 performs a heating and stirring that heats the water-added rice material R0 with stirring in a sealed container 21 and provides a gelatinized material R1. The pulverizing unit 40 performs pulverizing of the gelatinized material R1, which is obtained in the heating and stirring performed by the heating and stirring device 20, and provides the rice gel RG. Incidentally, the system employs polished white rice, unpolished rice, or the like appropriately experiencing rice washing, water immersion, and the like, as the rice material R0.

Although a rotary pulverizing device similar to the pulverizing device 40Aas described in the aforementioned first embodiment (see FIG. 1) can also be employed as the pulverizing unit 40, the pulverizing unit 40 in the system is configured as a known quern milling device 40B. Namely, such milling device 40B can produce the rice gel RG in a manner of passing the gelatinized material R1, which is supplied from the heating and stirring device 20, through a gap between an upper quern part and a bottom quern part relatively rotating, and by pulverizing the gelatinized material R1 by shear force generated in the passing.

For example, if, in the pulverizing unit 40, the gelatinized material R1 to be pulverized is exposed to air as in the milling device 40B, the rice gel RG obtained after the pulverization is preferably subjected to a heat sterilization treatment. Thus, the system is applies a heat sterilization treatment in the heat sterilization device 50 to the rice gel RG obtained in the milling device 40B, and to then perform division and packaging into the sealed bags B by the packaging device 60.

For example, the heat sterilization device 50 includes a so-called scraping heat exchanger. In other words, the heat sterilization device 50 includes, in a cylindrical conveyer space 51 that passes the rice gel RG, a scraping blade 52 for rotarily driving about a horizontal axis with a motor 54 as a driving source and scraping the rice gel RG adhered to an outer peripheral wall face of the conveyer space 51. In addition, a jacket 53 is disposed which surrounds the whole periphery of the outer peripheral face of the conveyer space 51. Thus, the heat sterilization device 50 can apply a heat sterilization treatment by heating an outer peripheral face of the conveyer space 51 in a manner of performing a so-called heating treatment that passes heating medium S such as overheated water vapor through the jacket 53, thereby indirectly heating the rice gel RG passing through the conveyer space 51.

Moreover, in such heat sterilization device 50, the rice gel RG, which is adhered to the outer peripheral wall face of the conveyer space 51 heated by the jacket 53, is constantly scraped by the scraping blade 52. This prevents the adhered material of the rice gel RG from burning and sticking because of long-time continuous heating, thereby avoiding reduction in quality caused by the burnt deposit.

It is contemplated that application of a heat sterilization treatment to the rice gel RG as mentioned above causes a gelatinized starch to be reheated and promotes collapse of starch particles, thereby slightly reducing viscosity and elasticity of the rice gel RG thus obtained. In this case, such slight variation of viscosity and elasticity of the rice gel RG can be kept within an acceptable range by adjusting a heating condition or the like in the heat sterilization treatment. Additionally, such application of a heat sterilization treatment to the rice gel RG can also eliminate a heat sterilization treatment, reheating, or the like to be applied to the gelatinized material R1, which is a semiprocessed product in the heating and stirring device 20 or other sites.

### [Other Embodiments]

Other embodiments of the present invention will be described. Here, a configuration of each of the embodiments described below is not only applied singly, but can also be applied in combination with a configuration of another embodiment.
(1) The embodiment described above has employed polished white rice or unpolished rice as the rice material R0, but can also alternatively employ rice bran as the rice material R0 to generate the rice gel RG from the rice bran.
(2) The embodiment described above has employed a heating and stirring device 20 with the coarse pulverizing blade 25, but can employ a heating and stirring device 20 without the coarse pulverizing blade 25 in the case of eliminating a coarse pulverization treatment using the coarse pulverizing blade 25.
(3) The embodiment described above includes a heating and stirring device 20 configured to stir the rice material R0 with scraping an adhered material adhering to the inner peripheral face 21a in the sealed container 21 by the scraper plate 22a of the scraping stirrer blade 22. However, the device may be configured to stir the rice material R0 by a stirrer blade having another form, such as with eliminating the scraper plate 22a described above.
(4) The embodiment have employed the rotary pulverizing device 40A or the milling device 40B as the pulverizing unit 40, but may also employ a pulverizing device that pulverizes the gelatinized material R1 in another manner. In addition, the embodiment is configured to pulverize the gelatinized material R1 in a single-stage pulverizing unit 40, but can also be configured to pulverize the gelatinized material R1 in a two- or more stage pulverizing unit 40.

### INDUSTRIAL APPLICABILITY

The present invention can be preferably employed for a rice gel production system and a rice gel production method that enable highly-efficient, low-cost production of a high-quality rice gel, with eliminating a rice cooking treatment that cooks or steams a rice material beforehand and provides cooked rice.

### DESCRIPTION OF REFERENCE NUMERALS

20 Heating and stirring device (heating and stirring unit)
21 Sealed container
21a Inner peripheral face
22 Scraping stirrer blade
25 Coarse pulverizing blade
30 Sealed conveying unit
40 Pulverizing device (pulverizing unit)
41 Rotor
41a Outer peripheral face
43 Liner
44 Gap
R0 Rice material
R1 Gelatinized material
RG Rice gel
W Water

## Claims

1. A rice gel production system of producing a gel-form rice gel, the system comprising:
a heating and stirring unit (20) that heats a water-added rice material with stirring in a sealed container (21) and obtains a gelatinized material, and
a pulverizing unit (40, 40A) that pulverizes the gelatinized material obtained in the heating and stirring unit (20) and obtains the rice gel **characterized in that** the heating and stirring unit (20) has a coarse pulverizing blad, (25) that rotates inside the sealed container (21) and coarsely pulverizes the rice material.

2. The rice gel production system according to claim 1, wherein
the heating and stirring unit (20) includes:
a scraping stirrer blade (22) that rotates inside the sealed container (21) and stirs the rice material with scraping an adhered material on an inner peripheral face of the sealed container (21); and
a heating part (27) that heats an outer peripheral face (21a) of the sealed container (21).

3. The rice gel production system according to claim 1 or 2,
wherein the pulverizing unit (40, 40A) includes:
a rotor (41) that includes shearing pulverizer teeth formed on an outer peripheral face (41a) and rotarily drives about an axis; and
a liner (43) that surrounds the outer peripheral face (41a) of the rotor (41) via a gap (44) that receives passing of the gelatinized material.

4. The rice gel production system according to any one of claims 1 to 3, comprising a sealed conveying unit (30) that conveys to the pulverizing unit (40) without exposing to air, the gelatinized material emitted from the heating and stirring unit (20).

5. A rice gel production method of producing a gel-form rice gel, the method comprising:
heating a water-added rice material with stirring in a sealed container (21) and obtaining a gelatinized material by a heating and stirring unit (20) having a coarse pulverizing blade (25) that rotates inside the sealed container (20) and coarsely pulverizes the rice material, and
pulverizing the obtained gelatinized material in a pulverizing unit (40, 40A) and obtaining the rice gel.

## Patentansprüche

1. System zur Herstellung von Reisgel zum Herstellen von Reisgel in Form von Gel, wobei das System umfasst:
eine Heiz- und Rühreinheit (20), die ein mit Wasser versetztes Reismaterial unter Rühren in einem abgedichteten Behälter (21) erhitzt und ein geliertes Material hervorbringt, und eine Pulverisiereinheit (40, 40A), die das aus der Heiz- und Rühreinheit (20) erhaltene gelierte Material pulverisiert und das Reisgel hervorbringt, **dadurch gekennzeichnet, dass** die Heiz- und Rühreinheit (20) eine grobe Pulverisierklinge (25) aufweist, die im Inneren des abgedichteten Behälters (21) rotiert und das Reismaterial grob pulverisiert.

2. System zur Herstellung von Reisgel nach Anspruch 1, wobei die Heiz- und Rühreinheit (20) Folgendes umfasst: ein schabendes Rührblatt (22), das im Inneren des abgedichteten Behälters (21) rotiert und das Reismaterial unter Schaben eines anhaftenden Materials an einer inneren Umfangsfläche des abgedichteten Behälters (21) rührt; und ein Heizteil (27), das eine äußere Umfangsfläche (21a) des abgedichteten Behälters (21) erhitzt.

3. System zur Herstellung von Reisgel nach Anspruch 1 oder 2, wobei die Pulverisiereinheit (40, 40A) Folgendes umfasst:
einen Rotor (41), der auf einer äußeren Umfangsfläche (41a) gebildete scherende Pulverisierzähne aufweist und um eine Achse drehend angetrieben wird; und eine Auskleidung (43), die die äußere Umfangsfläche (41a) des Rotors (41) über einen Spalt (44) umgibt, der dem Durchgang des gelierten Materials dient.

4. System zur Herstellung von Reisgel nach einem der Ansprüche 1 bis 3, umfassend eine abgedichtete Fördereinheit (30), die das aus der Heiz- und Rühreinheit (20) austretende gelierte Material zur Pulverisiereinheit (40) fördert, ohne es der Luft auszusetzen.

5. Verfahren zur Herstellung von Reisgel zum Herstellen von Reisgel in Form von Gel, wobei das Verfahren umfasst:
Erhitzen eines mit Wasser versetzten Reismaterials unter Rühren in einem abgedichteten Behälter (21) und Hervorbringen eines gelierten Materials über eine Heiz- und Rühreinheit (20) mit einer groben Pulverisierklinge (25), die im Inneren des abgedichteten Behälters (20) rotiert und das Reismaterial grob pulverisiert, und Pulverisieren des erhaltenen gelierten Materials in einer Pulverisiereinheit (40, 40A) und Hervorbringen des Reisgels.

## Revendications

1. Système de production de gel de riz permettant de produire un gel de riz sous forme de gel, le système comprenant :
une unité de brassage et de chauffage (20), laquelle chauffe une matière à base de riz additionnée d'eau dans un récipient (21) hermétique et obtient une matière gélatinisée, et une unité de pulvérisation (40, 40A), laquelle pulvérise la matière gélatinisée obtenue dans l'unité de brassage et de chauffage (20) et obtient le gel de riz **caractérisé en ce que** l'unité de brassage et de chauffage (20) comporte une grossière lame de pulvérisation (25), laquelle tourne à l'intérieur du récipient (21) hermétique et pulvérise grossièrement la matière à base de riz.

2. Système de production de gel de riz selon la revendication 1, dans lequel l'unité de brassage et de chauffage (20) comprend : une lame de brassage (22) par raclage, laquelle tourne à l'intérieur du récipient (21) hermétique et brasse la matière à base de riz, une matière collée étant raclée sur une face périphérique interne du récipient (21) hermétique ; et une partie de chauffage (27), laquelle chauffe une face périphérique (21a) externe du récipient (21) hermétique.

3. Système de production de gel de riz selon la revendication 1 ou 2, dans lequel l'unité de pulvérisation (40, 40A) comprend :
un rotor (41), lequel comprend des dents de cisaillement de pulvérisateur formées sur une face périphérique (41a) externe et entraînées en rotation autour d'un axe ; et un revêtement (43), lequel entoure la face périphérique (41a) externe du rotor (41) par l'intermédiaire d'une fente (44), laquelle est destinée au passage de la matière gélatinisée.

4. Système de production de gel de riz selon l'une quelconque des revendications 1 à 3, dans lequel une unité de transport (30) hermétique, laquelle achemine vers l'unité de pulvérisation (40) la matière gélatinisée produite par l'unité de brassage et de chauffage (20) sans qu'elle ne soit exposée à l'air.

5. Procédé de production de gel de riz permettant de produire un gel de riz sous forme de gel, le procédé comprenant :
le chauffage tout en brassant d'une matière à base de riz additionnée d'eau dans un récipient (21) hermétique ; et l'obtention d'une matière gélatinisée par une unité de brassage et de chauffage (20) comportant une grossière lame de pulvérisation (25), laquelle tourne à l'intérieur du récipient (20) hermétique et pulvérise grossièrement la matière à base de riz, et la pulvérisation de la matière gélatinisée obtenue dans une unité de pulvérisation (40, 40A) et l'obtention du gel de riz.
